# FASCICULE DE BREVET EUROPEEN

(11) **EP 1 238 550 B1**
(45) Date de publication et mention de la délivrance du brevet: **18.02.2009**
(21) Numéro de dépôt: 00990826.0
(22) Date de dépôt: 12.12.2000
(51) Int. Cl.: H04W 84/20

(54) **PROCEDE DE CONTROLE D'UN CANAL DE COMMUNICATION PARTAGE PAR PLUSIEURS STATIONS**
VERFAHREN ZUR STEUERUNG EINES KOMMUNIKATIONSKANALS, DEN MEHRERE STATIONEN GEMEINSAM NUTZEN
METHOD FOR CONTROLLING A COMMUNICATIONS CHANNEL SHARED BY SEVERAL STATIONS

(30) Priorité: 13.12.1999 FR 9915703
(43) Date de publication de la demande: 11.09.2002
(73) Titulaire: EADS Secure Networks, 78180 Montigny le Bretonneux (FR)
(72) Inventeur: METAIS, Jean-Pierre, F-78370 Plaisir (FR); LE GAL, David, F-93260 Les Lilas (FR)
(74) Mandataire: Verdure, Stéphane
(86) Numéro de dépôt international: PCT/FR2000/003480
(87) Numéro de publication internationale: WO 2001/045440

(56) Documents cités:
- EP-A- 0 737 018
- EP-A- 0 778 680
- GB-A- 2 285 723
- US-A- 4 887 266
- US-A- 5 612 955

## Description

La présente invention concerne le domaine des télécommunications, et notamment celui des radiocommunications mobiles professionnelles.

La plupart des systèmes de radiocommunications mobiles professionnelles utilisent le principe du « trunking », c'est-à-dire que le réseau possède une infrastructure qui gère l'utilisation des ressources radio, pendant la durée des communications. Le réseau alloue les ressources aux communications, et contrôle l'accès des terminaux à l'interface air.

Il existe également des systèmes sans « trunking », dans lesquels des terminaux mobiles peuvent communiquer en mode direct ou en mode relayé, c'est-à-dire par l'intermédiaire de répéteurs. En général, les communications de phonie sont du type talkie-walkie, avec une discipline d'alternat pour l'accès au canal. Le terminal écoute la fréquence du canal pour déterminer s'il a le droit d'émettre lorsque l'utilisateur actionne un bouton PTT (« push-to-talk ») dont est pourvu le terminal. Le droit d'émettre est accordé si le canal est libre ou occupé par une communication sur laquelle le terminal est prioritaire.

Dans ce dernier type de système, les services d'appel avec décroché (FOACSU : « full off-air call set-up ») de type téléphonique ne sont pas supportés. En effet, en l'absence de station de base ou de répéteur gérant la connexion et l'accès au canal radio, une communication peut être interrompue par un utilisateur extérieur, lors d'un silence sur le canal dû à l'arrêt de la transmission de la voix.

Le document GB-A-2 285 723 divulgue une procédure d'établissement d'appel pour des communications en mode direct dans un système de communications TDMA.

Le document US 4,887,266 décrit un système de radio communication impliquant un grand nombre de stations de communication et un réseau de communication fonctionnant sur la même fréquence radio. Une station (station « maître ») fournit des signaux de synchronisation à toutes les autres stations (stations « esclaves ») et commande l'accès des stations au canal radio unique.

Un but de la présente invention est de proposer une façon de supporter les services de type appel avec décroché dans des systèmes de radiocommunications sans « trunking ».

L'invention propose ainsi un procédé de contrôle d'un canal partagé par plusieurs stations d'émission/réception, selon la revendication 1. Une station d'émission/réception est maître du canal lorsqu'elle émet des signaux de trafic (typiquement de phonie). Dans le cas où la station est un terminal mobile, lorsque son détenteur cesse de parler, la station continue néanmoins à émettre les informations de signalisation sur la ressource radio employée par la communication. Ceci permet aux stations esclaves participant à la ' communication de prendre la parole, et empêche les autres stations, non concernées par la communication, de faire intrusion en croyant que le canal est libre.

Les informations de signalisation, émises au moins entre les alternats de phonie, peuvent comprendre des données identifiant un ensemble de stations habilitées à participer à la communication, et/ou des données indiquant un niveau de priorité de la communication, et/ou une référence d'identification de la communication. En recevant ces informations, une station d'émission/réception différente de la station maître peut déterminer si elle a le droit d'émettre sur la ressource radio, c'est-à-dire si elle participe à la communication (de type point à point ou appel de groupe) ou si elle dispose d'un droit de préemption du canal. La station qui se met à émettre devient alors la nouvelle station maître, et la précédente station maître devient une station esclave (à moins que ce soit cette station qui ait repris la parole).

Un autre aspect de l'invention se rapporte à une station d'émission/réception sur un canal partagé, mettant en oeuvre du procédé ci-dessus, selon la revendication 8.

D'autres particularités et avantages de la présente invention apparaîtront dans la description ci-après d'exemples de réalisation non limitatifs, en référence aux dessins annexés, dans lesquels :
- la figure 1 est un schéma illustrant un système de radiocommunication auquel l'invention peut s'appliquer ;
- la figure 2 et 3 sont des diagrammes montrant des exemples de structures de trames utilisables dans un procédé selon l'invention ; et
- la figure 4 est un schéma synoptique d'une station d'émission/réception selon l'invention.

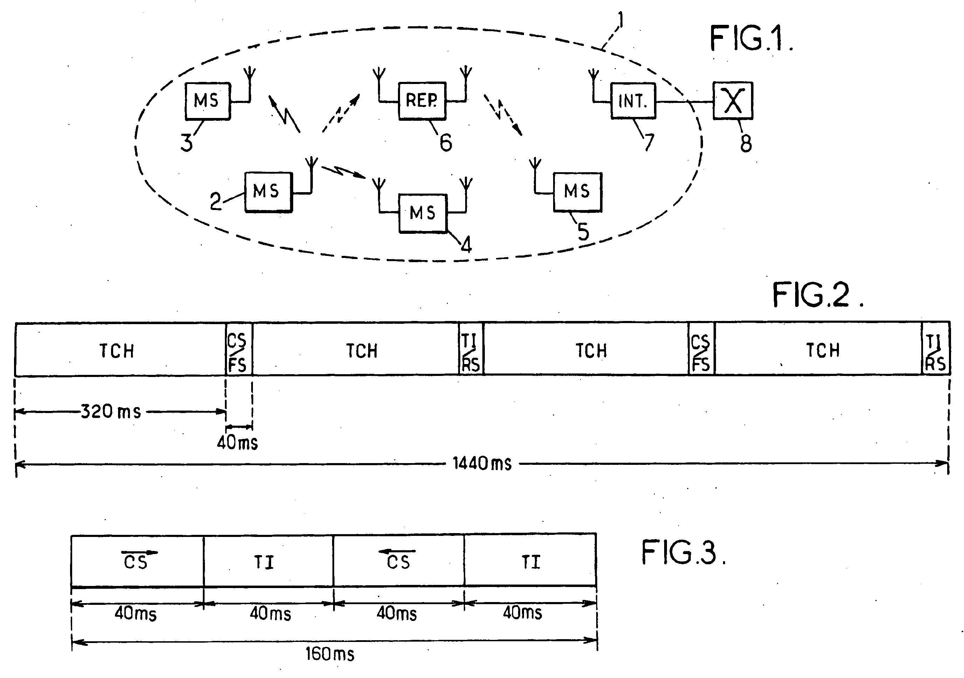

La figure 1 montre schématiquement un système 1 de radiocommunication professionnelle fournissant des services de téléphonie à des détenteurs de terminaux mobiles (MS) 2-5. Le système comprend des stations d'émission/réception radio comprenant les terminaux mobiles 2-5, éventuellement des répéteurs 6 servant à accroître la couverture radio du système, et éventuellement des interfaces 7 servant de passerelles avec un ou plusieurs commutateurs 8 de réseaux extérieurs (par exemple réseau commuté ou réseau cellulaire) pour permettre des appels téléphoniques entre les détenteurs des terminaux mobiles 2-5 et des abonnés extérieurs.

Les stations fixes 6,7 du système 1 n'offrent pas nécessairement un service de réseau pour superviser les communications radio en cours. Le contrôle de l'accès au canal est assuré par les différentes stations impliquées dans la communication, l'une d'entre elles étant une station maître, et la ou les autres des stations esclaves. Au cours d'une communication, l'attribution du rôle de station maître est effectuée selon les prises de parole par les locuteurs.

Dans l'illustration de la figure 1, le terminal mobile 2 est la station maître à l'instant considéré, dans une communication impliquant également les terminaux mobiles 3 et 4 en mode direct.

A titre d'exemple, chaque terminal mobile 2-5 comporte un bouton PTT (« press-to-talk ») que l'utilisateur actionne pour prendre la parole. En réponse à cet actionnement, le terminal évalue s'il peut accéder au canal supportant la communication. S'il ne peut pas, la prise de parole est refusée. Dans le cas d'une passerelle 7, le rôle de l'actionnement du bouton PTT est joué par la détection d'un signal de parole à relayer en provenance du commutateur 8.

A titre d'exemple, dans le cas particulier d'un système à accès multiple par répartition en fréquence (FDMA), chaque canal physique servant à supporter une communication consiste en une fréquence dont dispose le système. Dans le cas où un répéteur 6 intervient, celui-ci peut appliquer une transposition de cette fréquence pour éviter les problèmes d'interférences entre les signaux radio qu'il émet et ceux qu'il reçoit.

La figure 2 montre un exemple de structure de trame adoptée dans une phase d'utilisation du canal par une station maître en train d'émettre des informations de trafic au cours d'une communication de phonie dans un système radio FDMA selon la figure 1. Dans cet exemple, des supertrames de 1440 ms se succèdent sur la fréquence considérée. Cette supertrame est divisée en quatre parties de même durée, comprenant chacune un intervalle de 320 ms pour la transmission d'informations de trafic (signaux de phonie) sur un canal de trafic TCH, et un intervalle de 40 ms pour la transmission d'informations de signalisation.

Un intervalle de 40 ms sur deux est consacré à un canal logique de signalisation CS/FS de la station maître vers les stations esclaves participant à la communication. Ce canal logique porte un motif de synchronisation connu a priori des stations du système et servant à les synchroniser sur la structure de trame générée par la station maître. Les informations CS (« channel status ») renseignent les stations autres que la station maître sur l'état d'occupation du canal, et comprennent notamment :
- l'identité ou adresse dans le système de la station émettrice (maître) ;
- l'adresse de la station destinataire (cas d'une communication point à point), ou dans le cas d'un appel de groupe les adresses des stations destinataires, qui peuvent être concaténées en une adresse de groupe ;
- un numéro de référence de la communication en cours ;
- une identification du système 1 ;
- le niveau de priorité de la communication en cours ;
- l'état du canal.

Les informations FS (« forward signalling ») fournissent de la signalisation prévue dans le système depuis la station maître vers la ou les autres stations engagées dans la communication en cours.

Dans l'intervalle de 40 ms consacré au canal logique CS/FS, la transmission peut être effectuée dans l'ordre suivant :
- les informations FS, destinées à des stations déjà synchronisées ;
- le motif de synchronisation permettant à ces stations de poursuivre la synchronisation et aux autres stations de l'acquérir ;
- les informations CS que les stations synchronisées peuvent décoder pour déterminer s'il se déroule une communication les concernant et dans quelle mesure elle peuvent émettre sur le canal.

Les autres intervalles de temps de 40 ms de la supertrame selon la figure 2 servent à la réception d'informations par la station maître. Ces informations relèvent de deux canaux logiques :
- RS (« reverse signalling ») fournissant de la signalisation prévue dans le système vers la station maître depuis la ou les autres stations engagées dans la communication en cours, et permettant par exemple aux stations esclaves de répondre à des interrogations formulées par la station maître dans la signalisation FS ou de signaler leur entrée ou leur retrait d'une communication de groupe ;
- TI (« terminal interrupt ») permettant à des terminaux du système, pouvant être extérieurs à la communication en cours, de demander à accéder au canal pour des appels d'urgence. Le canal logique TI est également écouté par les stations esclaves qui ne sont pas en train d'émettre sur le canal logique RS.

La figure 3 montre un exemple de structure de trame utilisable dans une phase d'établissement d'appel dans le système radio de la figure 1. La même structure peut être adoptée lorsqu'une communication de phonie est en cours dans une phase de conservation du canal par la station maître, c'est-à-dire alors que la station maître a cessé d'émettre des informations de trafic et avant qu'une autre station se mette à émettre (devenant ainsi la nouvelle station maître utilisant le canal). Dans cet exemple, des trames de 160 ms se succèdent sur la fréquence considérée, et sont divisées chacune en quatre intervalles de 40 ms. Le premier intervalle contient des informations du type CS telles que décrites précédemment, accompagnées du motif de synchronisation. Le troisième intervalle est également prévu pour pouvoir contenir des informations du type CS. Les second et quatrième intervalles appartiennent au canal logique TI précité.

En phase d'établissement, la station qui a l'initiative de l'appel (maître) génère la structure de trame selon la figure 3, et envoie dans le premier intervalle de 40 ms des informations CS identifiant la ou les stations appelées, le codage de l'état du canal correspondant à un établissement d'appel. Chaque station appelée (esclave) détectant le motif de synchronisation dispose alors du troisième intervalle de 40 ms de la trame pour répondre à la station appelante. Si un seul échange d'informations de type CS ne suffit pas à établir la communication conformément au protocole d'appel employé, un dialogue peut avoir lieu entre les stations concernées, la station maître utilisant les-premiers intervalles des trames et les stations esclaves les troisièmes intervalles pour transmettre des informations de signalisation, l'état du canal indiqué représentant l'état d'avancement de la procédure d'établissement d'appel (sonnerie, décroché, etc.). Les stations peuvent également utiliser de la signalisation de type FS / RS. Une fois que la phase d'établissement est terminée (l'appelé a décroché), l'une quelconque des stations participant à la communication prend la parole et devient maître du canal en générant la structure de trame selon la figure 2.

En phase de conservation du canal par une station maître ayant cessé d'émettre sur le canal logique TCH, cette station maître émet les informations CS dans le premier intervalle de 40 ms de la trame selon la figure 3, avec un codage de l'état du canal indiquant aux stations esclaves impliquées dans la communication qu'elles sont autorisées à prendre le canal. En détectant ces informations CS, les stations esclaves se synchronisent sur la structure de trame de la figure 3. Si l'une d'elles prend le canal (actionnement du bouton PTT), elle émet un premier bloc d'informations CS dans le troisième intervalle de 40 ms de la trame et elle devient maître en adoptant la structure de trame selon la figure 2. La station maître conservant le canal est en écoute pendant le troisième intervalle de 40 ms de la trame. Quand elle y détecte les informations CS émises par l'autre station en train de prendre le canal, elle abandonne le statut de station maître désormais tenu par cette autre station. Si c'est le détenteur de la station maître conservant le canal qui reprend la parole en premier, cette station demeure maître du canal.

Le premier bloc d'informations CS émis par la station autorisée à prendre le canal pourrait aussi se trouver dans le second ou quatrième intervalles de 40 ms puisque la station maître est en écoute pendant ces intervalles.

Les stations extérieures à la communication détectent le motif de synchronisation accompagnant les informations CS dans le premier intervalle de 40 ms de la trame selon la figure 3, constatant ainsi l'occupation du canal. Elles peuvent éventuellement décoder les informations CS qui suivent dans le premier intervalle, ce qui leur permet de vérifier si elles peuvent entrer dans la communication (station visée par un appel de groupe qui ne participait pas précédemment à la communication ; c'est la fonction « late entry » également supportée par les informations CS en phase d'utilisation du canal par la station maître) ou si elles disposent d'un droit de préemption du canal compte tenu du niveau de priorité indiqué. Sinon, elles sont empêchées d'accéder au canal, sauf pour émettre des informations TI dans le cas où elles ont à passer un appel d'urgence.

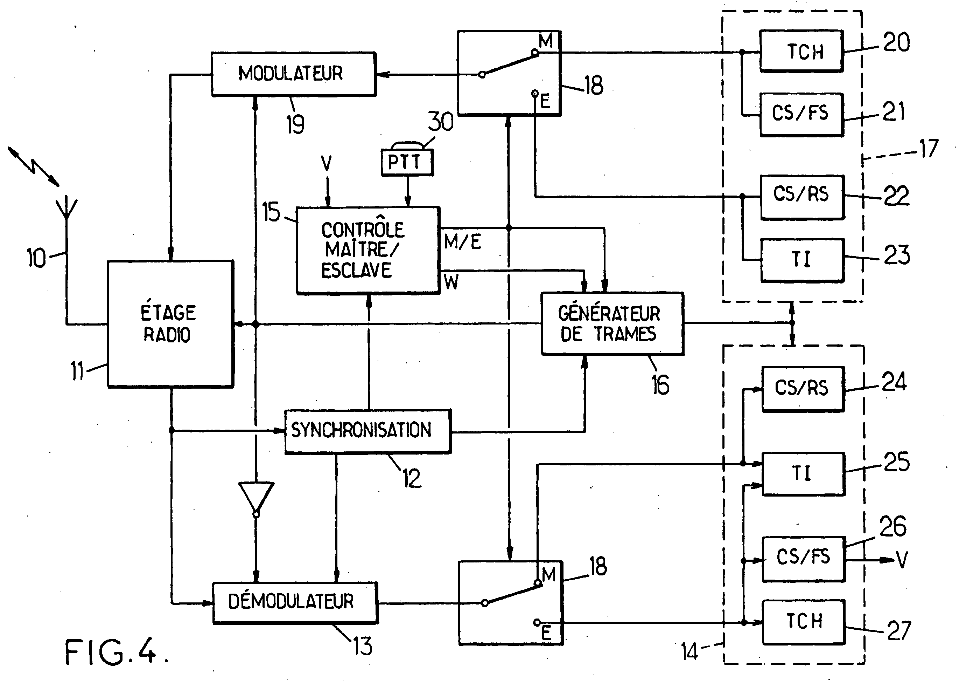

Un schéma de principe d'une station d'émission/réception est représenté sur la figure 4. L'antenne 10 de la station est reliée à son étage radio 11 correspondant à la partie analogique de la station radio.

Pour la partie réception, le signal en bande de base délivré par l'étage radio 11 est fourni à une unité de synchronisation 12 et à un démodulateur 13. L'unité 12 recherche les motifs de synchronisation du signal reçu, en particulier les motifs de synchronisation accompagnant les informations CS. Le démodulateur 13, synchronisé par l'unité 12, estime les symboles transmis à partir du signal en bande de base, et fournit ces symboles estimés aux circuits de traitement 14 de la station.

Une unité 15 contrôle le statut, maître ou esclave, de la station d'émission/réception, en délivrant un bit M/E à un générateur de trames 16 qui délivre des signaux de séquencement conformes à la structure de trame selon la figure 2 ou 3. L'unité 15 contrôle également le générateur 16 avec un bit W pour lui indiquer que les trames doivent être selon la figure 2 (W = 1, phase d'utilisation du canal) ou selon la figure 3 (W = 0, phase d'établissement d'appel ou de conservation du canal). Lorsque la station est un terminal maître (par exemple M/E = 1), la structure de trame est générée en référence à une horloge locale. Lorsque la station est esclave (M/E = 0), la structure de trame est générée conformément à l'information de synchronisation acquise par l'unité 12 à partir du signal reçu.

Le générateur de trames 16 contrôle l'étage radio 11, le modulateur 19 et le démodulateur 13 pour placer la station en émission ou en réception dans les intervalles de temps appropriés selon la structure de trame en vigueur.

Le générateur de trames 16 assure également le séquencement des circuits 14 de traitement du signal reçu, et celui des circuits 17 de traitement des signaux à émettre. La figure 4 illustre dans chaque bloc 14, 17 les circuits 20-23, 24-27 de traitement des canaux logiques évoqués en référence aux figures 2 et 3.

Lorsque la station est maître, le bit M/E = 1 délivré par l'unité 15 commande les commutateurs 18 dans la position M représentée sur la figure 4. En phase d'utilisation du canal, le signal émis, fourni à l'étage radio 11 par le modulateur 19, provient des circuits 20, 21 de traitement du canal logique de trafic TCH et du canal logique de signalisation CS/FS, cadencés par le générateur de trames 16. Dans les intervalles de 40 ms restants de la trame selon la figure 2, les circuits 24, 25 de la station maître écoutent les canaux logiques RS et TI pour recevoir les signaux éventuellement émis par les autres stations. En phase d'établissement d'appel ou de conservation du canal, le signal émis dans les premiers intervalles de 40 ms des trames provient du seul circuit 21 de traitement du canal logique CS/FS, cadencé par le générateur de trames 16. Dans les trois autres intervalles de 40 ms de la trame selon la figure 3, les circuits 24, 25 de la station maître écoutent les canaux logiques CS/RS et TI pour recevoir les signaux éventuellement émis par les autres stations.

Lorsque la station est esclave, les commutateurs 18 sont commandés dans la position E de la figure 4. En phase d'utilisation du canal par une autre station, le générateur de trames 16 active aux instants appropriés le circuit 22 de traitement du canal logique RS pour la partie émission et les circuits 25-27 de traitement des canaux logiques TI, CS/FS et TCH pour la partie réception, conformément à la structure de trame de la figure 2 générée par la station maître. En phase d'établissement d'appel ou de conservation du canal par une autre station, le générateur de trames 16 active aux instants appropriés le circuit 22 de traitement du canal logique CS/RS pour la partie émission et les circuits 25, 26 de traitement des canaux logiques TI et CS/FS pour la partie réception, conformément à la structure de trame de la figure 3 générée par la station maître.

Le générateur de trames 16 commande également le circuit 23 de traitement en émission sur le canal logique TI dans le cas des terminaux extérieurs à la communication en cours (commutateurs 18 dans la position E) pour leur permettre de placer éventuellement un appel d'urgence. Sinon, le circuit 25 de traitement en réception sur le canal logique TI est activé dans les intervalles correspondants pour permettre à la station de capter un éventuel appel en urgence.

Des terminaux selon la figure 4 peuvent communiquer entre eux en mode talkie-vvalkie. Lorsque l'utilisateur d'un terminal selon la figure 4 souhaite accéder au canal pour émettre des signaux de phonie, il actionne le bouton PTT 30 dont le terminal est pourvu. Son terminal, qui n'est pas maître du canal à ce moment, examine alors si la porteuse est occupée, en écoutant le canal suffisamment longtemps pour capter au moins un intervalle de temps du canal logique CS/FS. En l'absence de détection d'occupation, le terminal détermine qu'aucune autre station n'est maître du canal, et il devient lui-même maître pour émettre les signaux de l'utilisateur. Il peut aussi devenir maître si le canal est occupé par une communication sur laquelle l'utilisateur dispose d'un droit de préemption (ce qui peut être déterminé sur la base du niveau de priorité de la communication indiqué dans les informations CS). Le canal est libéré lorsque l'utilisateur a fini de parler. Le système assure ainsi des services de téléphonie similaires à ceux offerts dans les systèmes traditionnels sans « trunking ».

Avantageusement, le système permet également des communications de type appel avec décroché, entre deux terminaux mobiles ou davantage en mode direct ou répété Un ou plusieurs des terminaux impliqués dans une telle communication peuvent également être des terminaux extérieurs raccordés par l'intermédiaire d'une passerelle 7. L'appel est d'abord établi de la façon indiquée précédemment. A l'issue de cette phase d'établissement et jusqu'à la fin de la communication (l'avant-dernière station raccroche), il y a toujours une des stations radio impliquées qui est maître du canal.

Pendant qu'une station émet un signal de phonie sur une porteuse, elle est maître du canal fréquentiel correspondant. Lorsqu'elle cesse d'émettre sur le canal logique TCH sans que la communication soit terminée, elle reste maître et son générateur 16 génère la structure de trame selon la figure 3. Les circuits 21 sont commandés pour que la station maître continue d'émettre sur le canal logique de signalisation CS, en fournissant au moins les informations CS et le motif de synchronisation comme expliqué précédemment. Ceci empêche toute intrusion sur le canal d'un terminal non concerné par la communication en cours et ne disposant pas d'un droit de préemption. D'autre part, la station maître conservant le canal se place en réception dans les intervalles de temps de 40 ms où elle n'émet pas les informations CS.

L'état du canal codé dans les informations CS émises en phase de conservation du canal indique aux stations esclaves impliquées dans la communication qu'elles peuvent prendre le canal. Si l'utilisateur d'une telle station actionne son bouton PTT 30, cette station devient maître du canal et commence à émettre des signaux sur les canaux logiques CS/FS et TCH. Pour garantir que le motif de synchronisation transmis sur le canal logique CS/FS sera détecté par la station précédemment maître, la nouvelle station maître décale son émission de façon que le premier motif de synchronisation tombe dans le troisième intervalle de temps de 40 ms de la trame précédemment émise en phase de conservation du canal (à la rigueur dans le deuxième ou le quatrième). En réponse à la détection de signaux émis sur le canal par une autre station, notamment du motif de synchronisation, la station qui était maître devient esclave et se synchronise sur la structure de trame de la nouvelle station maître.

Dans l'exemple de réalisation illustré par la figure 4, les circuits 26 de traitement en réception sur le canal logique CS/FS délivrent un bit V dont l'activation indique que la station esclave est autorisée à prendre le canal. Ce bit est déterminé en analysant les informations CS émises par la station maître.

Il est activé si l'état du canal indique que la station maître a cessé d'émettre sur le canal logique TCH (phase de conservation du canal) et si la station esclave s'identifie comme participant à la communication sur la base des adresses incluses dans les informations CS. Il peut aussi être activé si le terminal constate, qu'il peut exercer un droit de préemption du canal compte tenu du niveau de priorité indiqué. Ce bit V est fourni à l'unité de contrôle 15 pour valider le statut maître lorsque l'utilisateur actionne le bouton PTT 30. D'autre part, l'unité 15 adresse au générateur de trames 16 le bit W qui, en cours d'appel, indique si l'une des stations en communication est en phase d'utilisation du canal (W = 1) ou non.

Lorsque la station est maître (M/E = 1) sans occuper le canal logique TCH (W = 0), la commande de l'étage radio 11, du modulateur 19 et du démodulateur 13 par le générateur de trames 16 est modifiée pour placer la station en réception dans les deuxième, troisième et quatrième intervalles de temps de 40 ms de chaque trame selon la figure 3. La détection du motif de synchronisation par l'unité 12 quand M/E = 1 eut W = 0 fait alors basculer la station dans l'état esclave (M/E = 0).

Dans une variante de réalisation, le changement de station maître du canal en cours de communication pourrait résulter d'un dialogue (handshake) entre la station précédemment maître et celle qui requiert de le devenir.

L'appel avec décroché se déroule de façon semblable lorsqu'un répéteur 6 est intercalé entre le terminal maître 2 et le terminal esclave 5, comme illustré en pointillés sur la figure 1. Le répéteur 6 répercute la structure de trame générée par le terminal maître 2, avec une transposition de fréquence porteuse, vers le terminal 5, ce qui permet à celui-ci de se synchroniser également. Ainsi, en ce qui concerne le canal fréquentiel utilisé entre le terminal 2 et le répéteur 6, le terminal 2 est la station maître émettant le signal de phonie et générant la structure de trame. Sur l'autre canal fréquentiel utilisé entre le terminal 5 et le répéteur 6, c'est le répéteur 6 qui, relayant le terminal 2, joue le rôle de station maître émettant des signaux de phonie en utilisant la structure de trame sur laquelle il s'est précédemment synchronisé. Le répéteur 6 peut être considéré comme comportant deux stations d'émission/réception dos-à-dos, l'une fonctionnant sur la fréquence primaire sur laquelle il reçoit les signaux du terminal maître, et l'autre sur la fréquence transposée sur laquelle il les réémet, la différence avec le cas du mode direct décrit ci-dessus étant que les terminaux doivent commuter leur fréquence pour le canal logique RS.

## Revendications

1. Procédé de contrôle d'un canal partagé par plusieurs stations d'émission/réception (2-5), comprenant au moins une phase d'utilisation du canal par une station (2) utilisant le canal en mode maître et participant à une communication, au cours de laquelle ladite station émet des informations de trafic sur le canal, suivie immédiatement par une phase de conservation du canal par ladite station, au cours de laquelle ladite station émet sur le canal des informations de signalisation indiquant à chaque autre station (3,4) participant à la communication qu'elle est autorisée à émettre à son tour des informations de trafic sur le canal, la phase de conservation du canal par ladite station se prolongeant, tant que la communication est en cours, jusqu'à une autre phase d'utilisation du canal en mode maître par une station participant à la communication.

2. Procédé selon la revendication 1, dans lequel, dans la phase d'utilisation du canal, ladite station émet en outre des informations de signalisation demandant à chaque autre station participant à la communication de ne pas émettre d'informations de trafic.

3. Procédé selon la revendication 2, dans lequel ladite station fonctionne dans la phase d'utilisation du canal selon une première structure de trame (Figure 2) comprenant au moins des intervalles de temps pour l'émission sur le canal des informations de trafic et des intervalles de temps pour l'émission sur le canal des informations de signalisation, et dans lequel ladite station fonctionne dans la phase de conservation du canal selon une seconde structure de trame (Figure 3) comprenant au moins des intervalles de temps pour l'émission sur le canal des informations de signalisation et des intervalles de temps pour la réception de signaux en provenance d'une autre station participant à la communication et commençant à émettre des informations de trafic sur le canal, la réception desdits signaux mettant fin à la phase de conservation du canal par ladite station, remplacée par une phase d'utilisation du canal par ladite autre station.

4. Procédé selon la revendication 3, dans lequel les première et seconde structures de trame comprennent en outre des intervalles de temps pour la réception de signaux en provenance de stations ne participant pas à la communication.

5. Procédé selon l'une quelconque des revendications précédentes, dans lequel lesdites informations de signalisation comprennent des données d'identification des stations participant à la communication.

6. Procédé selon l'une quelconque des revendications précédentes, dans lequel lesdites informations de signalisation comprennent des données indiquant un niveau de priorité de la communication.

7. Procédé selon l'une quelconque des revendications précédentes, dans lequel lesdites informations de signalisation comprennent une référence d'identification de la communication.

8. Station d'émission/réception sur un canal partagé, comprenant :
- des moyens d'utilisation du canal en mode maître au cours d'une communication, agencés pour émettre des informations de trafic sur le canal ;
- des moyens de conservation du canal en mode maître au cours d'une communication, agencés pour alternativement émettre sur le canal des informations de signalisation et écouter le canal, lesdites informations de signalisation indiquant à chaque autre station (2,3) participant à la communication qu'elle est autorisée à émettre à son tour des informations de trafic sur le canal ;
- des moyens de réception en mode esclave pour recevoir des informations de trafic et de signalisation émises en mode maître par une autre station participant à la communication ; et
- des moyens de commande pour activer les moyens d'utilisation du canal en mode maître en réponse à une requête d'utilisation lorsque des informations de signalisation autorisant à émettre des informations de trafic ont été reçues par les moyens de réception en mode esclave, pour activer les moyens de conservation du canal en mode maître en réponse à une désactivation des moyens d'utilisation du canal en mode maître, et pour activer les moyens de réception en mode esclave en réponse à la réception de signaux en provenance d'une autre station participant à la communication par les moyens de conservation du canal en mode maître écoutant le canal.

9. Station d'émission/réception selon la revendication 8, dans laquelle les moyens d'utilisation du canal en mode maître sont agencés pour émettre en outre des informations de signalisation demandant à chaque autre station participant à la communication de ne pas émettre d'informations de trafic.

10. Station d'émission/réception selon la revendication 9, dans laquelle les moyens d'utilisation du canal en mode maître fonctionnent selon une première structure de trame (Figure 2) comprenant au moins des intervalles de temps pour l'émission sur le canal des informations de trafic et des intervalles de temps pour l'émission sur le canal des informations de signalisation, et dans laquelle les moyens de conservation du canal en mode maître fonctionnent selon une seconde structure de trame (Figure 3) comprenant au moins des intervalles de temps pour l'émission sur le canal des informations de signalisation et des intervalles de temps pour l'écoute du canal.

11. Station d'émission/réception selon la revendication 10, dans laquelle les première et seconde structures de trame comprennent en outre des intervalles de temps pour la réception de signaux en provenance de stations ne participant pas à la communication.

12. Station d'émission/réception selon l'une quelconque des revendications 8 à 11, dans laquelle lesdites informations de signalisation comprennent des données d'identification des stations participant à la communication.

13. Station d'émission/réception selon l'une quelconque des revendications 8 à 12, dans laquelle lesdites informations de signalisation comprennent des données indiquant un niveau de priorité de la communication.

14. Station d'émission/réception selon l'une quelconque des revendications 8 à 13, dans laquelle lesdites informations de signalisation comprennent une référence d'identification de la communication.

## Claims

1. A method for controlling a channel shared by several transmitting/receiving stations(2-5), comprising at least one phase of use of the channel by a station 1(2)using the channel in master mode participating in a communication, in the course of which said station transmits traffic information on the channel, followed immediately by a phase of retention of the channel by said station, in the course of which said station transmits signaling information on the channel indicating each other station (3-4) participating in the communication that it is authorized to transmit in turn traffic information on the channel, the phase of retention of the channel by said station continuing, so long as the communication is in progress, until another phase of use of the channel in master mode by a station participating in the communication.

2. The method as claimed in claim 1, in which, in the phase of use of the channel, said station furthermore transmits signaling information requesting each other station participating in the communication not to transmit traffic information.

3. The method as claimed in claim 2, in which said station operates in the phase of use of the channel according to a first frame structure (Figure 2) comprising at least time intervals for the transmission on the channel of the traffic information and time intervals for the transmission on the channel of the signaling information, and in which said station operates in the phase of retention of the channel according to a second frame structure (Figure 3) comprising at least time intervals for the transmission on the channel of the signaling information and time intervals for the reception of signals originating from another station participating in the communication and beginning to transmit traffic information on the channel, the reception of said signals ending the phase of retention of the channel by said station, replaced by a phase of use of the channel by said other station.

4. The method as claimed in claim 3, in which the first and second frame structures furthermore comprise time intervals for the reception of signals originating from stations not participating in the communication.

5. The method as claimed in any one of the preceding claims, in which said signaling information comprises data for identifying the stations participating in the communication.

6. The method as claimed in any one of the preceding claims, in which said signaling information comprises data indicating a level of priority of the communication.

7. The method as claimed in any one of the preceding claims, in which said signaling information comprises a reference for identifying the communication.

8. A station for transmitting/receiving on a shared channel, comprising:
- means of use of the channel in master mode in the course of a communication, which are designed to transmit traffic information on the channel;
- means of retention of the channel in master mode in the course of a communication, which are designed to alternately transmit signaling information on the channel and to listen to the channel, said signaling information indicating to each other station (2-3) participating in the communication that it is authorized to transmit in turn traffic information on the channel;
- means of reception in slave mode for receiving traffic and signaling information transmitted in master mode by another station participating in the communication; and
- means of command for activating the means of use of the channel in master mode in response to a request for use when signaling information authorizing the transmission of traffic information has been received by the means of reception in slave mode, so as to activate the means of retention of the channel in master mode in response to a deactivation of the means of use of the channel in master mode, and to activate the means of reception in slave mode in response to the reception of signals originating from another station participating in the communication by the means of retention of the channel in master mode listening to the channel.

9. The transmitting/receiving station as claimed in claim 8, in which the means of use of the channel in master mode are designed to transmit, furthermore, signaling information requesting each other station participating in the communication not to transmit traffic information.

10. The transmitting/receiving station as claimed in claim 9, in which the means of use of the channel in master mode operate according to a first frame structure (Figure 2) comprising at least time intervals for the transmission on the channel of the traffic information and time intervals for the transmission on the channel of the signaling information, and in which the means of retention of the channel in master mode operate according to a second frame structure (Figure 3) comprising at least time intervals for the transmission on the channel of the signaling information and time intervals for channel listening.

11. The transmitting/receiving station as claimed in claim 10, in which the first and second frame structures furthermore comprise time intervals for the reception of signals originating from stations not participating in the communication.

12. The transmitting/receiving station as claimed in any one of claims 8 to 11, in which said signaling information comprises data for identifying the stations participating in the communication.

13. The transmitting/receiving station as claimed in any one of claims 8 to 12, in which said signaling information comprises data indicating a level of priority of the communication.

14. The transmitting/receiving station as claimed in any one of claims 8 to 13, in which said signaling information comprises a reference for identifying the communication.

## Patentansprüche

1. Verfahren zu Steuerung eines von mehreren Sende-/Empfangsstationen (2-5) gemeinsam genutzten Kanals, das mindestens eine Phase der Nutzung des Kanals durch eine den Kanal im Master-Modus nutzenden und an einer Kommunikation teilnehmenden Station (2), während der die Station Verkehrsinformationen auf dem Kanal sendet, direkt gefolgt von einer Phase der Beibehaltung des Kanals durch die Station aufweist, während der die Station auf dem Kanal Signalisierungsinformationen sendet, die jeder anderen an der Kommunikation teilnehmenden Station (3, 4) anzeigen, dass sie berechtigt ist, ihrerseits Verkehrsinformationen auf dem Kanal zu senden, wobei die Phase der Beibehaltung des Kanals durch die Station sich, so lange die Kommunikation läuft, bis zu einer weiteren Phase der Nutzung des Kanals im Master-Modus durch eine an der Kommunikation teilnehmenden Station verlängert.

2. Verfahren nach Anspruch 1, bei dem die Station in der Phase der Nutzung des Kanals außerdem Signalisierungsinformationen sendet, die jede andere an der Kommunikation teilnehmende Station auffordert, keine Verkehrsinformationen zu senden.

3. Verfahren nach Anspruch 2, bei dem die Station in der Phase der Nutzung des Kanals gemäß einem ersten Rahmenaufbau (Figur 2) arbeitet, der mindestens Zeitintervalle zum Senden der Verkehrsinformationen auf dem Kanal und Zeitintervalle zum Senden der Signalisierungsinformationen auf dem Kanal aufweist, und bei dem die Station in der Phase der Beibehaltung des Kanals gemäß einem zweiten Rahmenaufbau (Figur 3) arbeitet, der mindestens Zeitintervalle zum Senden der Signalisierungsinformationen auf dem Kanal und Zeitintervalle zum Empfang von Signalen aufweist, die von einer anderen Station kommen, die an der Kommunikation teilnimmt und beginnt, Verkehrsinformationen auf dem Kanal zu senden, wobei der Empfang der Signale die Phase der Beibehaltung des Kanals durch die Station beendet, die durch eine Phase der Nutzung des Kanals durch die andere Station ersetzt wird.

4. Verfahren nach Anspruch 3, bei dem die ersten und zweiten Rahmenaufbauten außerdem Zeitintervalle für den Empfang von Signalen aufweisen, die von nicht an der Kommunikation teilnehmenden Stationen kommen.

5. Verfahren nach einem der vorhergehenden Ansprüche, bei dem die Signalisierungsinformationen Identifikationsdaten der an der Kommunikation teilnehmenden Stationen enthalten.

6. Verfahren nach einem der vorhergehenden Ansprüche, bei dem die Signalisierungsinformationen Daten enthalten, die ein Prioritätniveau der Kommunikation anzeigen.

7. Verfahren nach einem der vorhergehenden Ansprüche, bei dem die Signalisierungsinformationen eine Identifikationsreferenz der Kommunikation enthalten.

8. Station zum Senden/Empfangen auf einem gemeinsam genutzten Kanal, die aufweist:
- Mittel zur Nutzung des Kanals im Master-Modus während einer Kommunikation, die eingerichtet sind, um Verkehrsinformationen auf dem Kanal zu senden;
- Mittel zur Beibehaltung des Kanals im Master-Modus während einer Kommunikation, die eingerichtet sind, um abwechselnd auf dem Kanal Signalisierungsinformationen zu senden und den Kanal abzuhören, wobei die Signalisierungsinformationen jeder anderen an der Kommunikation teilnehmenden Station (2, 3) anzeigen, dass sie berechtigt ist, ihrerseits Verkehrsinformationen auf dem Kanal zu senden;
- Mittel zum Empfang im Slave-Modus, um Verkehrs- und Signalisierungsinformationen zu empfangen, die von einer anderen an der Kommunikation teilnehmenden Station im Master-Modus gesendet werden; und
- Steuermittel, um die Mittel zur Nutzung des Kanals im Master-Modus als Reaktion auf eine Nutzungsanfrage zu aktivieren, wenn Signalisierungsinformationen, die dazu berechtigen, Verkehrsinformationen zu senden, von den Mitteln zum Empfang im Slave-Modus empfangen wurden, um die Mittel zur Beibehaltung des Kanals im Master-Modus als Reaktion auf eine Deaktivierung der Mittel zur Nutzung des Kanals im Master-Modus zu aktivieren, und um die Mittel zum Empfang im Slave-Modus als Reaktion auf den Empfang von von einer anderen an der Kommunikation teilnehmenden Station kommenden Signalen durch die Mittel zur Beibehaltung des Kanals im Master-Modus, die den Kanal abhören, zu aktivieren.

9. Sende-/Empfangsstation nach Anspruch 8, bei der die Mittel zur Nutzung des Kanals im Master-Modus eingerichtet sind, um außerdem Signalisierungsinformationen zu senden, die jede andere an der Kommunikation teilnehmende Station auffordern, keine Verkehrsinformationen zu senden.

10. Sende-/Empfangsstation nach Anspruch 9, bei der die Mittel zur Nutzung des Kanals im Master-Modus gemäß einem ersten Rahmenaufbau (Figur 2) arbeiten, der mindestens Zeitintervalle zum Senden der Verkehrsinformationen auf dem Kanal und Zeitintervalle zum Senden der Signalisierungsinformationen auf dem Kanal aufweist, und bei der die Mittel zur Beibehaltung des Kanals im Master-Modus gemäß einem zweiten Rahmenaufbau (Figur 3) arbeiten, der mindestens Zeitintervalle zum Senden der Signalisierungsinformationen auf dem Kanal und Zeitintervalle zum Abhören des Kanals aufweist.

11. Sende-/Empfangsstation nach Anspruch 10, bei der der erste und der zweite Rahmenaufbau außerdem Zeitintervalle für den Empfang von Signalen aufweisen, die von nicht an der Kommunikation teilnehmenden Stationen kommen.

12. Sende-/Empfangsstation nach einem der Ansprüche 8 bis 11, bei der die Signalisierungsinformationen Identifikationsdaten der an der Kommunikation teilnehmenden Stationen enthalten.

13. Sende-/Empfangsstation nach einem der Ansprüche 8 bis 12, bei der die Signalisierungsinformationen Daten enthalten, die ein Prioritätsniveau der Kommunikation anzeigen.

14. Sende-/Empfangsstation nach einem der Ansprüche 8 bis 13, bei der die Signalisierungsinformationen eine Identifikationsreferenz der Kommunikation enthalten.
